# EUROPÄISCHE PATENTSCHRIFT

(11) **EP 1 088 696 B1**
(45) Veröffentlichungstag und Bekanntmachung des Hinweises auf die Patenterteilung: **16.11.2005**
(21) Anmeldenummer: 00121006.1
(22) Anmeldetag: 27.09.2000
(51) Int. Cl.: B60N 2/56, B60H 1/00

(54) **Vorrichtung zum Klimatisieren in Kraftfahrzeugen**
Device for air-conditioning of motor vehicles
Dispositif de climatisation de véhicules automobiles

(30) Priorität: 02.10.1999 DE 19947567
(43) Veröffentlichungstag der Anmeldung: 04.04.2001
(73) Patentinhaber: WEBASTO KLIMATECHNIK GmbH, D-82131 Stockdorf (DE)
(72) Erfinder: Scheid, Helmut, 86920 Denklingen (DE)
(74) Vertreter: Wiese, Gerhard

(56) Entgegenhaltungen:
- EP-A- 0 272 789
- EP-A- 0 350 896
- EP-A- 0 411 375
- DE-A- 2 523 646
- DE-A- 19 645 544
- DE-A- 19 824 191
- DE-A- 19 830 797
- DE-B- 1 082 391
- FR-A- 2 717 747
- PATENT ABSTRACTS OF JAPAN vol. 017, no. 208 (M-1401), 23. April 1993 (1993-04-23) -& JP 04 349017 A (NIPPONDENSO CO LTD), 3. Dezember 1992 (1992-12-03)

## Beschreibung

Die vorliegende Erfindung bezieht sich auf eine Vorrichtung zum Klimatisieren in Kraftfahrzeugen mit mindestens zwei hintereinander angeordneten Fahrzeugsitzen, wobei mindestens einem Teil der Fahrzeugsitze jeweils eine erste Klimaeinheit zum Beeinflussen des Klimas für den auf dem betreffenden Fahrzeugsitz Sitzenden und zusätzlich eine zweite Klimaeinheit zum Beeinflussen des Klimas für den auf dem jeweils dahinter befindlichen Fahrzeugsitz Sitzenden zugeordnet sind.

Dabei soll unter dem Begriff "Klimaeinheit" vorliegend allgemein jede Anordnung verstanden werden, die es erlaubt, einen beliebigen Parameter, wie Temperatur, Belüftungsgrad und/oder Luftfeuchtigkeit, zu beeinflussen, der Auswirkung auf das Klima im Passagierraum des Fahrzeuges hat.

Aus der EP 0 411 375 A1 ist eine derartige Klimatisierungsvorrichtung eines Fahrzeugsitzes bekannt, bei der eine erste Klimaeinheit die Sitzfläche klimatisiert und ein Luftkanal mit einem Ausströmer als zweite Klimaeinheit auf der Sitzrückseite zur Klimatisierung des Raumes hinter dem Sitz, also zur Klimatisierung des dahinter sitzenden Fahrgastes dient. Diese Vorrichtung ermöglicht zwar die Klimatisierung der Sitzflächen eines Fahrzeugsitzes; der Fußraum und/oder der Kopfbereich werden jedoch von der Temperatur des davor stehenden Sitzes beeinflußt.

Aus der EP 0 350 896 A1 ist eine weitere Klimatisierungseinrichtung bekannt, bei dem jede Doppelsitzreihe eines Omnibus durch jeweils einen Flächenwärmetauscher unter den Sitzen und einen weiteren Flächenwärmetauscher an der Seitenwand klimatisiert wird. Der Raum zwischen den Sitzen wird dabei jedoch zumindest für den weiter innen Sitzenden nur unzureichend klimatisiert.

Weitere Vorrichtungen sind zum Beispiel aus DE-AS 1 082 391, DE 25 23 646 A1, DE 198 24 191 A1 und DE 198 30 797 A1 bekannt. Des weiteren ist aus DE 196 45 544 A1 ein Fahrzeugsitz mit wenigstens einem kombinierten Heiz/Kühlelement bekannt, das zur Klimatisierung des Fahrzeugsitzes wahlweise an den Sekundärkreislauf eines Wärmetauschers, der primärseitig von wenigstens einem bordeigenen Wärmeerzeuger beaufschlagt ist, und/oder an den Sekundärkreislauf eines Wärmetauschers anschließbar ist, der primärseitig von wenigstens einem bordeigenen Kälteerzeuger beaufschlagt ist. Die bekannten Vorrichtungen lassen jedoch hinsichtlich des für die einzelnen Fahrzeuginsassen bereitgestellten Komforts zu wünschen übrig.

Der Erfindung liegt die Aufgabe zugrunde, eine Vorrichtung zum Klimatisieren in Kraftfahrzeugen zu schaffen, die den einzelnen Fahrzeuginsassen eine individuelle Klimaeinstellung sowohl ihres Sitzes als auch des Zwischenraumes zum davorstehenden Sitz auf besonders bequeme und einfache Art erlaubt.

Diese Aufgabe wird erfindungsgemäß dadurch gelöst, daß bei einer Vorrichtung der eingangs genannten Art das Klima im Bereich mindestens eines Teiles der Fahrzeugsitze individuell mittels jeweils einer Bedienanordnung beeinflußbar ist, die für den auf dem jeweiligen Fahrzeugsitz Sitzenden leicht zugänglich an dem jeweils davor befindlichen Fahrzeugsitz und/oder an dem jeweiligen Fahrzeugsitz selbst angeordnet ist und mittels deren sowohl die dem jeweiligen Fahrzeugsitz zugeordnete erste Klimaeinheit als auch die zweite Klimaeinheit des jeweils davor befindlichen Fahrzeugsitzes steuerbar sind.

Mittels der Vorrichtung nach der Erfindung ist es möglich, um jeden Fahrgast herum im Fahrzeug nach Wunsch ein individuelles Mikroklima zu erzeugen, und nicht nur etwa die Sitztemperatur zu beeinflussen. Dies gilt auch für große, lange Fahrzeuge. Dieses Mikroklima kann der Fahrgast selbst verstellen und seinen Behaglichkeitsbedürfnissen anpassen. Dem kommt in der Praxis insofern wesentliche Bedeutung zu, als das Behaglichkeitsempfinden von Fahrgast zu Fahrgast unterschiedlich ist und auch noch durch den jeweiligen physischen und psychischen Zustand des einzelnen Fahrgasts (zum Beispiel Bewegung, Erholungszustand, Schlafen und so weiter) beeinflußt wird. Außerdem herrschen an unterschiedlichen Fahrzeugplätzen (Fond/Heck) beziehungsweise bei Bussen über die Länge des Fahrzeuges unterschiedliche Umgebungsbedingungen aufgrund von Sonneneinstrahlung, Wärmeeinstrahlung durch den Motor und dergleichen. Solchen Unterschieden kann mit der Vorrichtung nach der Erfindung wirkungsvoll Rechnung getragen werden.

Bevorzugte weitere Ausgestaltungen der Erfindung ergeben sich aus den Unteransprüchen.

Die Bedienanordnung zum individuellen Beeinflussen des im Bereich eines Fahrzeugsitzes herrschenden Klimas ist besonders bequem erreichbar, wenn sie an der Rückseite des jeweils davor befindlichen Fahrzeugsitzes und/oder an einer Seitenfläche des betreffenden Fahrzeugsitzes selbst angeordnet ist.

Die Klimaeinheiten können neben und/oder unter den Sitzen angeordnet beziehungsweise an diese adaptiert sein. Eine besonders kompakte, platzsparende Anordnung wird erhalten, wenn die Klimaeinheiten in die Fahrzeugsitze, bevorzugt in den unteren und/oder hinteren Teil der Fahrzeugsitze, integriert sind. Insbesondere kann zweckmäßig den Klimaeinheiten ein in den jeweiligen Sitz integrierter Wärmetauscher zugeordnet sein, der primärseitig von einer bordeigenen Temperiereinheit mit vorzugsweise flüssigem Temperiermittel beaufschlagt ist. Die Wärmetauscher aller oder einer Gruppe von Fahrzeugsitzen sind vorteilhaft primärseitig parallel mit einer Vorlaufleitung und einer Rücklaufleitung verbunden, die an die Temperiereinheit angeschlossen sind. Dabei kann auf der Primärseite im Zulauf und/oder im Ablauf der Wärmetauscher mindestens ein verstellbares Ventil zum Steuern der Menge des zu- oder abfließenden Temperiermittels liegen.

Die Wärmetauscher der Fahrzeugsitze sind vorzugsweise primärseitig mit der Vorlaufleitung und der Rücklaufleitung über beidseitig druckdichte Kupplungen verbunden. Dies erlaubt bei Fahrzeugen mit mehreren Sitzreihen einen einfachen modularen Aufbau der Bestuhlung, da einzelne Sitze oder Sitzbänke ohne Verlust von flüssigem Temperiermittel flexibel entnommen oder eingestellt werden können.

Die Wärmetauscher sind zweckmäßig sekundärseitig an mindestens ein Temperierelement im Sitzpolster und/oder der Rückenlehne des jeweils zugehörigen Fahrzeugsitzes angeschlossen und/oder mit mindestens einem Lufteinlaß und mindestens einem Luftauslaß im Bereich des zugehörigen Fahrzeugsitzes verbunden.

Die über den Luftauslaß abgegebene Luftmenge kann vorteilhaft mittels mindestens einer verstellbaren Luftklappe einstellbar sein.

Im Sekundärkreis des Wärmetauschers liegt vorzugsweise mindestens ein Gebläse, dessen Leistung zweckmäßig steuerbar ist und für diesen Zweck mehrstufig mit wahlweise ein- und ausschaltbaren Gebläsestufen ausgebildet oder stufenlos steuerbar sein kann.

Die erste Klimaeinheit kann insbesondere zum Belüften und/oder Temperieren des auf dem Sitz sitzenden Fahrgasts im Gesäß- und/oder Rückenbereich ausgebildet sein, während die zweite Klimaeinheit zum Temperieren der Sitzrückseite des diese Klimaeinheit aufweisenden Fahrzeugsitzes ausgelegt sein kann. Dabei kann die Sitzrückseite vorteilhaft mindestens teilweise als Strahlungskörper ausgebildet sein.

Die zweite Klimaeinheit kann auch zur Abgabe von temperierter Luft in den Fußraum des dahinter angeordneten Fahrzeugsitzes und oder in den Raum zwischen dem mit der zweiten Klimaeinheit ausgestatteten Fahrzeugsitz und dem dahinter angeordneten Fahrzeugsitz ausgelegt sein.

Bevorzugte Ausführungsbeispiele der Erfindung sind nachstehend unter Bezugnahme auf die beigefügten Zeichnungen näher erläutert. Es zeigen:
- FIG. 1: eine schematische, perspektivische Darstellung von zwei nebeneinander angeordneten Fahrzeugsitzen beispielsweise eines Reisebusses; und
- FIG. 2 bis 5: schematische Darstellungen der beiden Klimaeinheiten eines der Fahrzeugsitze gemäß FIG. 1 in verschiedenen Betriebsstellungen.

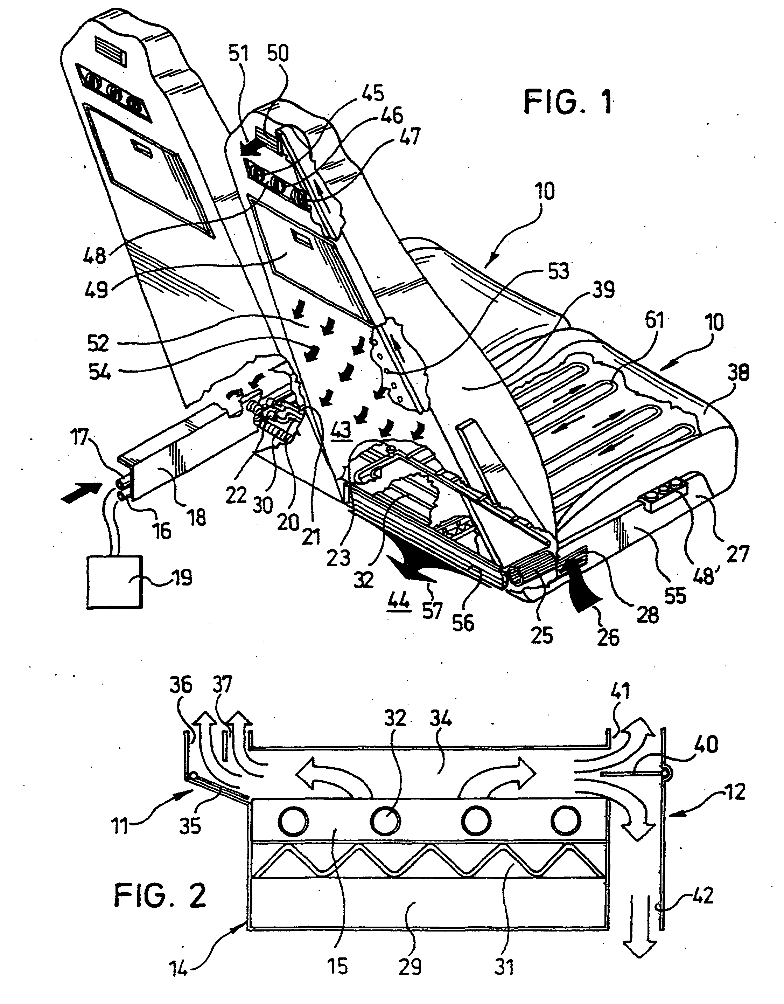

In FIG. 1 sind zwei nebeneinander angeordnete, in gleicher Weise ausgebildete Fahrzeugsitze 10 beispielsweise eines Reisebusses veranschaulicht. Jeder dieser Sitze 10 ist mit Mitteln 11 zum Beeinflussen des Klimas des auf dem jeweiligen Sitz Platz nehmenden Fahrzeuginsassen versehen. Diese Mittel sind vorliegend kurz als "erste Klimaeinheit" bezeichnet. Die Fahrzeugsitze 10 weisen außerdem Mittel 12 zum Beeinflussen des Klimas des Fahrzeuginsassen auf, der auf dem hinter dem jeweiligen Sitz 10 befindlichen Fahrzeugsitz Platz nimmt. Solche (hinteren) Fahrzeugsitze sind in Fig. 1 nicht dargestellt, jedoch in gleicher Weise aufgebaut wie die veranschaulichten (vorderen) Fahrzeugsitze 10. Die Mittel 12 sind vorliegend kurz als "zweite Klimaeinheit" bezeichnet. Dabei versteht es sich, daß die beiden Klimaeinheiten 11 und 12 eines einzelnen Fahrzeugsitzes 10 völlig selbständig aufgebaut sein, oder aber gemeinsame Bauteile aufweisen können. Die Figuren zeigen ein Ausführungsbeispiel der zuletzt genannten Art.

Bei dem dargestellten Ausführungsbeispiel sind die Sitze 10 jeweils in ihrem hinteren unteren Teil mit einer kompakten Klimabox 14 ausgestattet, die Teil beider Klimaeinheiten 11 und 12 des betreffenden Sitzes ist. Die Klimabox 14 weist mindestens einen Wärmetauscher 15 auf. Die Wärmetauscher 15 der Fahrzeugsitze sind primärseitig parallel an eine Vorlaufleitung 16 und eine Rücklaufleitung 17 angeschlossen, die bei Omnibussen vorzugsweise in einem Schacht 18 am seitlichen Bodenbereich zur betreffenden Seitenwand verlegt sind. Die Leitungen 16, 17 führen zu einer bordeigenen Temperiereinheit, die in Fig.1 als Block 19 dargestellt ist. Die Temperiereinheit 19 kann in an sich beispielsweise aus der EP 0 816 143 A2 bekannter Weise mit einem Kühlkreislauf zum Kühlen eines flüssigen Kälteträgers, einem Heizkreislauf zum Wärmen eines flüssigen Wärmeträgers sowie einem oder mehreren Mischkreisläufen zum Mischen von Kälte- und Wärmeträger und zur Abgabe des flüssigen Gemisches als Temperiermittel an die Vorlaufleitung 16 versehen sein. Bei dem Kälte- und Wärmeträger und damit auch bei dem über die Leitungen 16, 17 geführten Temperiermittel handelt es sich vorzugsweise um Wasser oder ein Gemisch aus Wasser und Frostschutzmittel, beispielsweise Glykol.

Entsprechend Fig. 1 weisen die Wärmetauscher 15 jeweils eine Vorleitung 20 und eine Rückleitung 21 auf, die über eine bei 22 angedeutete, beidseitig druckdichte Kupplung mit der Vorlaufleitung 16 beziehungsweise der Rücklaufleitung 17 lösbar verbunden sind. Die Kupplung 22 ist dabei zweckmäßig an einem in die Leitungen 20, 21 übergehenden oder mit diesem verbundenen Schlauchstück (nicht dargestellt) angebracht. Dies erlaubt das An- und Abkoppeln von einzelnen Sitzen oder Sitzreihen ohne Verlust an Temperiermittel und gestattet damit eine flexible Bestuhlung bei Fahrzeugen mit mehreren Sitzreihen. Die Wärmetauscher 15 können ferner mit einem bei 23 angedeuteten verstellbaren Temperiermittel-Ventil ausgerüstet sein. Das Ventil 23 kann im Zulauf und/oder im Ablauf des betreffenden Wärmetauschers liegen. Es erlaubt es, die Menge des zu- beziehungsweise ablaufenden Temperiermittels und damit die Leistung des Wärmetauschers 15 wahlweise einzustellen. Vorzugsweise ist dafür gesorgt, daß eine Vorkonditionierung des dem Wärmetauscher 15 zugehenden flüssigen Temperiermittels auf moderate Temperatur erfolgt, um die Gefahr von Verbrühungen auszuschließen. Im Kühlbetrieb kann die Temperatur des Temperiermittels in der Vorlaufleitung 16 über entsprechende Kennfelder oder Luftfeuchtesensoren so eingestellt werden, daß in den Leitungen 16, 20 und innerhalb der Klimaeinheiten 11, 12 kein Kondenswasser auftritt.

In den Wärmetauschern 15 erfolgt ein Wärmeaustausch zwischen dem primärseitig zugehenden flüssigen Temperiermittel und einem Luftstrom, der dem betreffenden Wärmetauscher in Form von Frischluft und/oder Umluft mittels eines Gebläses 25 sekundärseitig zugeführt wird. Bei dem Gebläse 25 kann es sich insbesondere um ein Axial-, Radial- oder Querstromgebläse handeln. Jedem Sitz 10 kann auch eine Kombination von mehreren Gebläsen zugeordnet sein. Die Gebläse 25 sollen ein niedriges Geräuschniveau haben. Vorzugsweise ist die Gebläseleistung regulierbar. Zur Leistungsregulierung können die Gebläse 25 mit mehren einzeln zu- und abschaltbaren Gebläsestufen versehen oder stufenlos regelbar ausgebildet sein. Die Klimabox 14 kann so ausgeführt sein, daß das Gebläse 25 nur Umluft (in Fig. 1 mit Pfeil 26 angedeutet) über einen beispielsweise an einer Sitzseitenfläche 27 angeordneten Umlufteinlaß 28 in einen eintrittsseitigen Luftschacht 29 ansaugt. Die Klimabox 14 kann aber auch über einen an den Luftschacht 29 angeschlossenen Luftschlauch 30 mit Frischluft versorgt werden, wobei der Luftschlauch 30 seinerseits, vorzugsweise über eine lösbare Kupplung, an einen Frischluft-Versorgungsschacht angeschlossen ist. Bei dem Ausführungsbeispiel der Fig. 1 bildet der die Leitungen 16 und 17 aufnehmende Schacht 18 zugleich den Frischluft-Versorgungsschacht. Es versteht sich jedoch, daß auch ein oder mehrere gesonderte Frischluft-Versorgungsschächte vorgesehen sein können, die vorzugsweise ebenfalls im Bodenbereich in die Nähe der Sitze 10 reichen. Vorzugsweise kann den Wärmetauschern 15 wahlweise Frischluft und Umluft in einstellbaren Anteilen von 0 bis 100% zugeführt werden. Der Frischluft-Versorgungsschacht 18 kann auch selbst mit einem Gebläse ausgerüstet und so als Überdruckkanal ausgeführt sein, der sich für einen reinen Umluftbetrieb mittels einer nicht dargestellten verstellbaren Luftklappe verschließen läßt.

Die zu temperierende Luft gelangt von dem Luftschacht 29 über einen Luftfilter 31 in den Wärmetauscher 15, wo sie eine oder mehrere flüssiges Temperiermittel führende Rohrschlangen 32 umströmt. Nach dem dadurch verursachten Wärmeaustausch tritt die temperierte Luft in einen austrittsseitigen Luftschacht 34 über. Der Luftschacht 34 kann in Abhängigkeit von der Stellung einer Luftklappe 35 mit Luftzuführungen 36 und 37 für ein Sitzpolster 38 beziehungsweise ein Rückenlehnenpolster 39 des den betreffenden Wärmetauscher 15 aufweisenden Sitzes 10 verbunden werden. Der Luftschacht 34 läßt sich ferner in Abhängigkeit von der Stellung einer weiteren Luftklappe 40 mit Luftzuführungen 41 und 42 für die Sitzrückseite 43 beziehungsweise den Fußraum 44 hinter dem den betreffenden Wärmetauscher 15 aufweisenden Sitz 10 verbinden.

Die Luftklappen 35, 40 werden beispielsweise durch Betätigen von Bedienelementen 45 beziehungsweise 46 verstellt. Dies kann zum Beispiel über Seilzüge oder elektrisch gesteuerte Stellglieder erfolgen. Die Bedienelemente 45, 46 können ebenso wie ein weiteres Bedienelement 47 Teil einer insgesamt mit 48 bezeichneten Bedienanordnung, und sie können in der in Fig. 1 angedeuteten Weise beispielsweise als Schalter ausgeführt sein. Die Bedienanordnung 48 ist an der Sitzrückseite 43 an leicht zugänglicher Stelle, zum Beispiel oberhalb eines Klapptisches 49, angeordnet. Das Bedienelement 47 kann beispielsweise für die Steuerung des Gebläses 25 vorgesehen sein. Falls das Temperiermittelventil 23 vorhanden ist, kann die Bedienanordnung 48 gegebenenfalls ein zusätzliches Bedienelement für dieses Ventil aufweisen. Den vorstehend genannten Bedienelementen entsprechende Bedienelemente können mindestens zum Teil aber auch Bestandteil einer Bedienanordnung 48' sein, die sich an einer Seitenfläche 55 der Fahrzeugsitze 10 befindet. Beispielsweise kann es insbesondere bei Verwendung von Seilzügen zweckmäßig sein, die erste Klimaeinheit 11 eines Fahrzeugsitzes 10 über Bedienelemente einer Bedienanordnung 48' an der Seitenfläche 55 dieses Fahrzeugsitzes zu steuern und zur Steuerung der zweiten Klimaeinheit 12 des davor befindlichen Fahrzeugsitzes Bedienelemente einer Bedienanordnung 48 an der Rückseite 43 des davor befindlichen Fahrzeugsitzes zu verwenden.

Die Rückwand des Sitzes 10 kann als Doppelwand mit dazwischenliegendem Luftkanal ausgeführt oder mit einem oder mehreren Luftschächten versehen sein, um temperierte Luft von der Luftzuführung 41 zu einem Ausströmer 50 beispielsweise im oberen Bereich der Sitzrückseite 43 gelangen zu lassen. Von dort kann ein Luftstrom in der mit dem Pfeil 51 dargestellten Weise austreten. Der Ausströmer 50 kann permanent offen oder wahlweise verschließbar ausgebildet und gegebenenfalls auch so beschaffen sein, daß sich die Richtung des Luftstroms 51 einstellen läßt. Die Rückwand des Sitzes 10 kann alternativ oder zusätzlich auch aus einem luftdurchlässigen Stoff 52 oder Kunststoff bestehen und/oder mit einer Folge von einzelnen kleinen Löchern 53 versehen sein, um von der Luftzuführung 41 kommende Luft durchzulassen. Der Dahintersitzende erfährt dadurch eine flächige, sanfte Beaufschlagung mit konditionierter Luft, wie dies in Fig. 1 mit Pfeilen 54 angedeutet ist.

Die Luftzuführungen 36, 37 für das Sitzpolster 38 und das Rückenlehnenpolster 39 leiten temperierte Luft zu den betreffenden Polstern. Diese können hinsichtlich der Luftführung ähnlich ausgebildet sein, wie dies zuvor für die Sitzrückwand erläutert ist, um temperierte Luft zu der auf dem Sitz 10 befindlichen Person gelangen zu lassen und/oder durch Kanäle unter Sitz- und Rückenlehnenfläche hindurchzuführen. Von der Luftzuführung 42 aus wird eine weitere Luftmenge zu einem Ausströmer 56 nahe dem unteren Ende der Sitzrückseite 43 geleitet. Der den Ausströmer 56 verlassende Luftstrom 57 ist in den Fußraum hinter dem Sitz 10 gerichtet.

In der vorliegend verwendeten Nomenklatur beeinflußt die erste, allgemein mit 11 bezeichnete Klimaeinheit des Sitzes 10 das Klima für die auf dem betreffenden Fahrzeugsitz sitzende Person. Zu der ersten Klimaeinheit 11 gehören daher der Wärmetauscher 15, das Gebläse 25 mit Bedienelement 47, der Luftfilter 31, die Luftschächte 29 und 34, die Luftklappe 35 mit dem Bedienelement 45 und die Luftzuführungen 36, 37. Dagegen dient die zweite, allgemein mit 12 bezeichnete Klimaeinheit des Sitzes 10 dem Beeinflussen des Klimas für die Person, die auf dem jeweils dahinter befindlichen Fahrzeugsitz sitzt. Teil der zweiten Klimaeinheit 12 sind infolgedessen der Wärmetauscher 15, das Gebläse 25 mit Bedienelement 47, der Luftfilter 31, die Luftschächte 29 und 34, die Luftklappe 40 mit dem Bedienelement 46 und die Luftzuführungen 41, 42. Bei dieser Ausführungsform ist das Gebläse 25 Teil beider Klimaeinheiten 11 und 12. Eine Verstellung der Gebläseleistung hat daher Einfluß auf beide Klimaeinheiten 11, 12. Diesem Einfluß kann durch entsprechende Verstellung der Luftklappen 35, 40 entgegengewirkt werden. Sollen die Klimaeinheiten 11, 12 aber völlig unabhängig voneinander gesteuert werden können, kann ein Gebläse 25 mit fest vorgegebener oder voreingestellter Leistung verwendet werden, oder es können getrennte Gebläse für die Klimaeinheiten 11 und 12 vorgesehen sein. Jedenfalls ist die Auslegung so getroffen, daß der auf einem Fahrzeugsitz 10 sitzende Fahrgast durch Betätigen der Bedienanordnung 48 an der Rückseite 43 des davor befindlichen Fahrzeugsitzes und/oder durch Betätigen der Bedienanordnung 48' an der Seitenfläche 55 seines Sitzes die erste Klimaeinheit 11 seines eigenen Sitzes und die zweite Klimaeinheit 12 des davor befindlichen Fahrzeugsitzes steuern und dadurch gezielt und individuell sein eigenes Klima, bedingt nicht nur durch Temperatur und Belüftung von Sitz- und Rückenlehnenfläche, sondern auch durch die Temperatur und die Belüftung des Fußraums und der Rückseite des davor befindlichen Fahrzeugsitzes, in gewünschter Weise beeinflussen kann.

So zeigt Fig. 2 beispielsweise den Fall einer Beheizung oder Kühlung und Belüftung von Sitzpolster, Sitzrücken und Fußraum. Die Temperatur des Temperiermittels in der Vorlaufleitung 16 ist mittels einer zentralen Steuerung oder Regelung auf einen gewünschten Wert eingestellt. Die Luftklappen 35 und 40 sind in Stellungen gebracht, in denen sie den Luftschacht 34 mit den Luftzuführungen 36, 37, 41 und 42 verbinden. Ströme temperierter, das heißt erwärmter oder gekühlter, Luft gelangen infolgedessen zur Sitzrückseite 43 und zum Ausströmer 56 des Sitzes, der sich vor dem betreffenden Fahrgast befindet, und zu den Sitz- und Rückenlehnenpolstern 38, 39 des Fahrzeugsitzes, auf dem der betreffende Fahrgast sitzt.

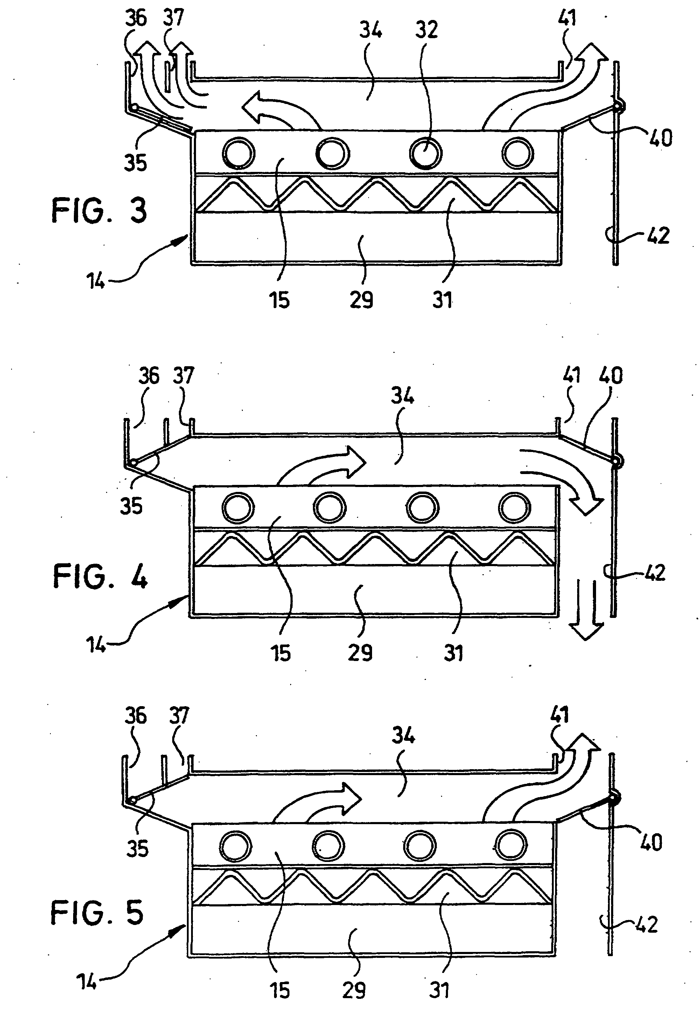

In Fig. 3 ist die Beheizung oder Kühlung und Belüftung von Sitzpolster und Sitzrücken dargestellt. Die Luftklappe 35 nimmt die gleiche Stellung ein wie in Fig. 2. Die Luftklappe 40 gibt dagegen nur die Verbindung von Luftschacht 34 und Luftzuführung 41 frei, während sie den Einlaß in die Luftzuführung 42 absperrt. Anders als im Falle der Fig. 2 gelangt daher kein Luftstrom zum Fußraum-Ausströmer 56 des Fahrzeugsitzes 10 vor dem betreffenden Fahrgast.

Fig. 4 zeigt den Fall einer alleinigen Beheizung des Fußraums 44 des betreffenden Fahrgastes. Die Luftklappen 35, 40 blockieren die Einlässe der Luftzuführungen 36, 37 und 41 und geben nur den Einlaß der Luftzuführung 42 frei. Der gesamte den Wärmetauscher 15 durchlaufende Luftstrom gelangt daher zu dem Ausströmer 56 des Fahrzeugsitzes 10 vor dem betreffenden Fahrgast.

In Fig. 5 ist schließlich der Fall veranschaulicht, daß nur die Sitzrückseite 43 des Fahrzeugsitzes 10 vor dem betreffenden Fahrgast gekühlt oder beheizt werden soll. Die Luftklappe 35 versperrt die Einlässe der Luftzuführungen 36 und 37. Die Luftklappe 40 blockiert den Einlaß der Luftzuführung 42, gibt jedoch den Einlaß der Luftzuführung 41 frei.

Es versteht sich, daß anstelle der jeweils zwei Luftzuführungen 36 und 37 beziehungsweise 41 und 42 gemeinsam zugeordneten Luftklappen 35, 40 auch Luftklappen oder andere Steuerelemente vorgesehen werden können, die jeweils die Zufuhr von Luft zu nur einer der Luftzuführungen regulieren.

Bei dem zuvor erläuterten Ausführungsbeispiel erfolgt die Energieverteilung über im Wärmetauscher 15 temperierte Luftströme. Zusätzlich oder stattdessen kann jedoch entsprechend erwärmtes oder abgekühltes flüssiges Temperiermittel auch unmittelbar in die Polsterung, die Rückenlehne oder andere Teile des Fahrzeugsitzes 10 eingeleitet werden. So zeigt Fig. 1 entsprechende Flüssigkeitsleitungen oder -schläuche 61 im Sitzpolster 38. Auf diese Weise kann die Temperatur der Polsterung der des Körpers des auf dem Sitz 10 sitzender Fahrgastes angepaßt werden. Die Sitzrückenfläche kann als Strahlungskörper für den Dahintersitzenden dienen. Gespeicherte Wärme oder Kälte kann so rasch abgebaut werden. Die Regulierung der jeweiligen Temperiermittelmenge kann über Ventile erfolgen, die mit Bedienelementen (zum Beispiel Bedienknöpfen oder Drehschaltern) mechanisch (beispielsweise über Seilzüge) oder elektrisch verstellt werden. Solche Bedienelemente können wiederum Bestandteil der Bedienanordnung 48 und/oder 48' sein. Sie erlauben es dem Fahrgast, die Sitztemperatur seines Sitzes und/oder die Temperatur der Sitzrück-und/oder Sitzunterseite des vor ihm befindlichen Fahrzeugsitzes einzustellen.

Die vorliegende Vorrichtung erlaubt es insbesondere, folgende Aufgaben wirkungsvoll zu erfüllen:
Beheizung und falls erwünscht auch Belüftung des Fußraumes zwischen dem Sitz, auf welchem der betreffende Fahrgast sitzt, und dem davor befindlichen Fahrzeugsitz;
wahlweise Beheizung oder Kühlung der Sitzrückseite des Fahrzeugsitzes, der sich vor dem Sitz befindet, auf welchem der betreffende Fahrgast sitzt, und damit Beheizung oder Kühlung des Sitzraumes des betreffenden Fahrgastes;
Belüftung für den Fahrgast mit warmer oder kalter Luft im Brust- und Kopfbereich;
Belüftung und gegebenenfalls auch leichte Kühlung des Fahrzeugsitzes, auf dem der Fahrgast sitzt;
Beheizung des Fahrzeugsitzes, auf dem der Fahrgast sitzt, im Gesäß- und Rükkenbereich.

Die Wärme- beziehungsweise Kälteeinbringung erfolgt dabei nahe am Fahrgast. Damit wird eine besonders gute Wirkung bei im Vergleich zu punktueller Beaufschlagung reduzierten Luftgeschwindigkeiten sichergestellt. Es ist ein schneller Abbau von gespeicherter Wärme oder Kälte möglich. Infolgedessen stellt sich das Behaglichkeitsempfinden besonders rasch ein. Darüberhinaus wird eine gesteigerte Behaglichkeit dadurch erzielt, daß der Fahrgast vor-und rückseitig von klimatisierten Flächen umgeben ist. Die den Klimaboxen zugeführte Menge an flüssigem Temperiermittel kann soweit voreingestellt werden, daß eine Beeinflussung des Gesamtklimas im Fahrzeug in Grenzen gehalten werden kann. Bei Verwendung von elektrisch angesteuerten Luftklappen ist es auch möglich, selbsttätig für eine Ausgangsstellung der Luftklappen zu sorgen, wenn beispielsweise der Fahrzeugmotor abgestellt wird. Diese Ausgangsstellung läßt sich so wählen, daß die Beeinflussung des Gesamtklimas im Fahrzeug minimiert wird, solange die Luftklappen diese Ausgangsstellung einnehmen. Damit wird erreicht, daß nicht besetzte Sitze im wesentlichen keinen Einfluß auf das Gesamtklima haben.

Bei Verwendung der vorliegend erläuterten Sitzklimatisierung können in der Regel üblicherweise in das Fahrzeug eingebaute Wärmetauscher beziehungsweise Klimageräte, wie Konvektoren, Seitenwandheizer und Dachklimaboxen bei Bussen, in ihrer Leistung reduziert oder ganz weggelassen werden, so daß sich die Mehrkosten in Grenzen halten.

### Bezugszeichenliste

- 0: Fahrzeugsitz
- 11: erste Klimaeinheit
- 12: zweite Klimaeinheit
- 14: Klimabox
- 15: Wärmetauscher
- 16: Vorlaufleitung
- 17: Rücklaufleitung
- 18: Schacht
- 19: Temperiereinheit
- 20: Vorleitung
- 21: Rückleitung
- 22: Kupplung
- 23: Temperiermittel-Ventil
- 25: Gebläse
- 26: Umluft
- 27: Sitzseitenfläche
- 28: Umlufteinlaß
- 29: Luftschacht
- 30: Luftschlauch
- 31: Luftfilter
- 32: Rohrschlange
- 34: Luftschacht
- 35: Luftklappe
- 36, 37: Luftzuführung
- 38: Sitzpolster
- 39: Rückenlehnenpolster
- 40: Luftklappe
- 41, 42: Luftzuführung
- 43: Sitzrückseite
- 44: Fußraum
- 45, 46, 47: Bedienelement
- 48, 48': Bedienanordnung
- 49: Klapptisch
- 50: Ausströmer
- 51: Luftstrom
- 52: Stoff
- 53: Loch
- 54: Luftstrom
- 55: Seitenfläche
- 56: Ausströmer
- 57: Luftstrom
- 61: Flüssigkeitsleitung

## Patentansprüche

1. Vorrichtung zum Klimatisieren in Kraftfahrzeugen mit mindestens zwei hintereinander angeordneten Fahrzeugsitzen (10), wobei mindestens einem Teil der Fahrzeugsitze jeweils eine erste Klimaeinheit (11) zum Beeinflussen des Klimas für den auf dem betreffenden Fahrzeugsitz Sitzenden und zusätzlich eine zweite Klimaeinheit (12) zum Beeinflussen des Klimas für den auf dem jeweils dahinter befindlichen Fahrzeugsitz Sitzenden zugeordnet sind, **dadurch gekennzeichnet, daß** das Klima im Bereich mindestens eines Teiles der Fahrzeugsitze (10) individuell mittels jeweils einer Bedienanordnung (48, 48') beeinflußbar ist, die für den auf dem jeweiligen Fahrzeugsitz Sitzenden leicht zugänglich an dem jeweils davor befindlichen Fahrzeugsitz und/oder an dem jeweiligen Fahrzeugsitz selbst angeordnet ist und mittels deren sowohl die dem jeweiligen Fahrzeugsitz zugeordnete erste Klimaeinheit (11) als auch die zweite Klimaeinheit (12) des jeweils davor befindlichen Fahrzeugsitzes steuerbar sind.

2. Vorrichtung nach Anspruch 1, **dadurch gekennzeichnet, daß** die Bedienanordnung (48, 48') zum individuellen Beeinflussen des im Bereich eines Fahrzeugsitzes (10) herrschenden Klimas an der Rückseite (43) des jeweils davor befindlichen Fahrzeugsitzes und/oder an einer Seitenfläche (55) des betreffenden Fahrzeugsitzes selbst angeordnet ist.

3. Vorrichtung nach Anspruch 1 oder 2, **dadurch gekennzeichnet, daß** die Klimaeinheiten (11, 12) in die Fahrzeugsitze (10) integriert sind.

4. Vorrichtung nach einem der vorhergehenden Ansprüche, **dadurch gekennzeichnet, daß** den Klimaeinheiten (11, 12) ein in den jeweiligen Sitz (10) integrierter Wärmetauscher (15) zugeordnet ist, der primärseitig von einer bordeigenen Temperiereinheit (19) beaufschlagt ist.

5. Vorrichtung nach Anspruch 4, **dadurch gekennzeichnet, daß** der Wärmetauscher (15) primärseitig mit einem flüssigen Temperiermittel beaufschlagt ist.

6. Vorrichtung nach Anspruch 4 oder 5, **dadurch gekennzeichnet, daß** die Wärmetauscher (15) der Fahrzeugsitze (10) primärseitig parallel mit einer Vorlaufleitung (16) und einer Rücklaufleitung (17) verbunden sind, die an die Temperiereinheit (19) angeschlossen sind.

7. Vorrichtung nach Anspruch 6, **dadurch gekennzeichnet, daß** auf der Primärseite im Zulauf und/oder im Ablauf der Wärmetauscher (15) mindestens ein verstellbares Ventil (23) zum Steuern der Menge des zu- oder abfließenden Temperiermittels liegt.

8. Vorrichtung nach Anspruch 6 oder 7, **dadurch gekennzeichnet, daß** die Wärmetauscher (15) der Fahrzeugsitze (10) primärseitig mit der Vorlaufleitung (16) und der Rücklaufleitung (17) über beidseitig druckdichte Kupplungen (22) verbunden sind.

9. Vorrichtung nach einem der Ansprüche 4 bis 8, **dadurch gekennzeichnet, daß** die Wärmetauscher (15) sekundärseitig an mindestens ein Temperierelement im Sitzpolster (38) und/oder der Rückenlehne des jeweils zugehörigen Fahrzeugsitzes (10) angeschlossen sind.

10. Vorrichtung nach einem der Ansprüche 4 bis 9, **dadurch gekennzeichnet, daß** die Wärmetauscher (15) sekundärseitig mit mindestens einem Lufteinlaß (28, 30) und mindestens einem Luftauslaß (51, 53, 56) im Bereich des zugehörigen Fahrzeugsitzes (10) verbunden sind.

11. Vorrichtung nach einem der Ansprüche 4 bis 10, **dadurch gekennzeichnet, daß** die über den Luftauslaß (51, 53, 56) abgegebene Luftmenge einstellbar ist.

12. Vorrichtung nach Anspruch 11, **dadurch gekennzeichnet, daß** zum Einstellen der über den Luftauslaß (51, 53, 56) abgegebenen Luftmenge mindestens eine verstellbare Luftklappe (35, 40) vorgesehen ist.

13. Vorrichtung nach einem der Ansprüche 4 bis 12, **dadurch gekennzeichnet, daß** im Sekundärkreis des Wärmetauschers (15) mindestens ein Gebläse (25) liegt.

14. Vorrichtung nach Anspruch 13, **dadurch gekennzeichnet, daß** die Leistung des Gebläses (25) steuerbar ist.

15. Vorrichtung nach Anspruch 14, **dadurch gekennzeichnet, daß** das Gebläse (25) mehrstufig ausgebildet ist und die Gebläsestufen wahlweise ein- und ausschaltbar sind.

16. Vorrichtung nach Anspruch 14, **dadurch gekennzeichnet, daß** das Gebläse (25) stufenlos steuerbar ist.

17. Vorrichtung nach einem der vorhergehenden Ansprüche, **dadurch gekennzeichnet, daß** die erste Klimaeinheit (11) zum Belüften und/oder Temperieren des auf dem Sitz (10) Sitzenden im Gesäß- und/oder Rückenbereich ausgebildet ist.

18. Vorrichtung nach einem der vorhergehenden Ansprüche, **dadurch gekennzeichnet, daß** die zweite Klimaeinheit (12) zum Temperieren der Sitzrückseite (43) des diese Klimaeinheit aufweisenden Fahrzeugsitzes (10) ausgelegt ist.

19. Vorrichtung nach Anspruch 18, **dadurch gekennzeichnet, daß** die Sitzrückseite (43) mindestens teilweise als Strahlungskörper ausgebildet ist.

20. Vorrichtung nach einem der vorhergehenden Ansprüche, **dadurch gekennzeichnet, daß** die zweite Klimaeinheit (12) zur Abgabe von temperierter Luft in den Fußraum (44) des dahinter angeordneten Fahrzeugsitzes (10) und oder in den Raum zwischen dem mit der zweiten Klimaeinheit ausgestatteten Fahrzeugsitz und dem dahinter angeordneten Fahrzeugsitz ausgelegt ist.

## Claims

1. Device for air conditioning in vehicles having at least two vehicle seats (10) arranged one behind another, at least some of the vehicle seats each being assigned a first air-conditioning unit (11) for influencing the climate for the person sitting on the relevant vehicle seat and, in addition, a second air-conditioning unit (12) for influencing the climate for the person sitting on the vehicle seat respectively located behind, **characterized in that** the climate in the region of at least some of the vehicle seats (10) can be influenced individually by means of an operating arrangement (48, 48') in each case, which, for the person sitting on the respective vehicle seat, is arranged easily accessibly on the vehicle seat respectively located in front and/or on the respective vehicle seat itself and by means of which both the first air-conditioning unit (11) assigned to the respective vehicle seat and the second air-conditioning unit (12) of the vehicle seat respectively located in front can be controlled.

2. Device according to Claim 1, **characterized in that** the operating arrangement (48, 48') for individually influencing the climate prevailing in the region of a vehicle seat (10) is arranged on the rear (43) of the vehicle seat respectively located in front and/or on a side surface (55) of the relevant vehicle seat itself.

3. Device according to Claim 1 or 2, **characterized in that** the air-conditioning units (11, 12) are integrated into the vehicle seats (10).

4. Device according to one of the preceding claims, **characterized in that** the air-conditioning units (11, 12) are assigned a heat exchanger (15) which is integrated into the respective seat (10) and, on the primary side, is acted on by an on-board temperature control unit (19).

5. Device according to Claim 4, **characterized in that**, on the primary side, the heat exchanger (15) is acted on by a liquid temperature control medium.

6. Device according to Claim 4 or 5, **characterized in that**, on the primary side, the heat exchangers (15) of the vehicle seats (10) are connected in parallel to a flow line (16) and a return line (17), which are connected to the temperature control unit (19).

7. Device according to Claim 6, **characterized in that**, on the primary side, in the feed and/or in the discharge of the heat exchangers (15) there is at least one adjustable valve (23) for controlling the volume of the temperature control medium flowing in or out.

8. Device according to Claim 6 or 7, **characterized in that**, on the primary side, the heat exchangers (15) of the vehicle seats (10) are connected to the flow line (16) and the return line (17) via couplings (22) which are pressure-tight on both sides.

9. Device according to one of Claims 4 to 8, **characterized in that**, on the secondary side, the heat exchangers (15) are connected to at least one temperature control element in the seat cushion (38) and/or the backrest of the respectively associated vehicle seat (10).

10. Device according to one of Claims 4 to 9, **characterized in that**, on the secondary side, the heat exchangers (15) are connected to at least one air inlet (28, 30) and at least one air outlet (51, 53, 56) in the region of the associated vehicle seat (10).

11. Device according to one of Claims 4 to 10, **characterized in that** the volume of air discharged via the air outlet (51, 53, 56) is adjustable.

12. Device according to Claim 11, **characterized in that**, in order to adjust the volume of the air discharged via the air outlet (51, 53, 56), at least one adjustable air flap (35, 40) is provided.

13. Device according to one of Claims 4 to 12, **characterized in that** there is at least one blower (25) in the secondary circuit of the heat exchanger (15).

14. Device according to Claim 13, **characterized in that** the output of the blower (25) is controllable.

15. Device according to Claim 14, **characterized in that** the blower (25) is of multi-stage design and the blower stages can be switched on and off as desired.

16. Device according to Claim 14, **characterized in that** the blower (25) is continuously controllable.

17. Device according to one of the preceding claims, **characterized in that** the first air-conditioning unit (11) is designed to ventilate and/or control the temperature in the region of the posterior and/or back of the person sitting on the seat (10).

18. Device according to one of the preceding claims, **characterized in that** the second air-conditioning unit (12) is designed to control the temperature of the rear (43) of the vehicle seat (10) having this air-conditioning unit.

19. Device according to Claim 18, **characterized in that** the rear (43) of the seat is at least partly designed as a radiant element.

20. Device according to one of the preceding claims, **characterized in that** the second air-conditioning unit (12) is designed to discharge temperature-controlled air into the footwell (44) of the vehicle seat (10) arranged behind it or into the space between the vehicle seat equipped with the second air-conditioning unit and the vehicle seat arranged behind it.

## Revendications

1. Dispositif pour climatiser l'intérieur de véhicules à moteur avec au moins deux sièges pour véhicules (10) disposés l'un derrière l'autre, au moins une partie des sièges pour véhicules se voyant affecter respectivement une première unité de climatisation (11) pour influencer le climat de la personne assise sur le siège à véhicule concerné et, en outre, une seconde unité de climatisation (12) pour influencer le climat de la personne assise sur le siège situé respectivement derrière, **caractérisé en ce que** te climat dans une zone d'au moins une partie des sièges pour véhicules (10) est individuellement influençable par l'intermédiaire respectivement d'un dispositif de commande (48, 48') qui est facilement accessible pour la personne assise sur le siège pour véhicules associé, le dispositif étant disposé sur le siège pour véhicules situé devant et/ou disposé respectivement sur le siège pour véhicules lui-même et au moyen duquel, aussi bien la première unité de climatisation (11) affectée que la seconde unité de climatisation (12) du siège pour véhicules respectivement situé juste devant, sont réglables.

2. Dispositif selon la revendication 1, **caractérisé en ce que** le dispositif de commande (48, 48') pour influencer de manière individuelle le climat régnant dans la zone d'un siège pour véhicules (10) est disposé sur la face arrière (43) du siège pour véhicules respectivement situé devant et/ou sur une face latérale (55) du siège pour véhicules proprement-dit, concerné.

3. Dispositif selon la revendication 1 ou 2, **caractérisé en ce que** les unités de climatisation (11, 12) sont intégrées dans les sièges pour véhicules (10).

4. Dispositif selon l'une des revendications précédentes, **caractérisé en ce qu'**un échangeur de chaleur (15) intégré dans chacun des sièges pour véhicules (10) est affecté aux unités de climatisation (11, 12), qui est, sur sa face primaire, alimenté par une unité de thermostatisation (19) embarquée.

5. Dispositif selon la revendication 4, **caractérisé en ce que** l'échangeur de chaleur (15) est alimenté sur sa face primaire par un moyen de thermostatisation liquide.

6. Dispositif selon la revendication 4 ou 5, **caractérisé en ce que** les échangeurs de chaleurs des sièges de véhicules (10) sont reliés parallèlement, sur leur face primaire, à une canalisation montante (16) et à une canalisation descendante ou de retour (17) qui sont raccordées à l'unité de thermostatisation (19).

7. Dispositif selon la revendication 6, **caractérisé en ce qu'**au moins une vanne ou soupape réglable (23) pour réguler la quantité de moyen de thermostatisation affluant ou s'écoulant est disposée sur la face primaire dans l'arrivée et/ou la sortie de l'échangeur de chaleur (15).

8. Dispositif selon la revendication 6 ou 7, **caractérisé en ce que** les échangeurs de chaleur (15) des sièges pour véhicules (10) sont, sur leur face primaire, reliés à la canalisation montante (16) et à la canalisation descendante (17) via des dispositifs d'accouplement (22) qui sont étanches en pression sur leurs deux côtés.

9. Dispositif selon l'une des revendications 4 à 8, **caractérisé en ce que** les échangeurs de chaleur (15) sont reliés, sur leurs faces secondaires, à au moins un élément de thermostatisation dans le rembourrage de siège (38) et/ou le dossier du siège pour véhicules (10) respectif associé.

10. Dispositif selon l'une des revendications 4 à 9, **caractérisé en ce que** les échangeurs de chaleur (15) sont reliés, sur leurs faces secondaires, à au moins une entrée d'air (28, 30) et au moins une sortie d'air (51, 53, 56) au niveau du siège pour véhicules (10) associé.

11. Dispositif selon l'une des revendications 4 à 10, **caractérisé en ce que** la quantité d'air évacuée via la sortie d'air (51, 53, 56) est réglable.

12. Dispositif selon la revendication 11, **caractérisé en ce qu'**au moins un clapet réglable (35, 40) est prévu pour régler la quantité d'air évacuée via la sortie d'air (51, 53, 56).

13. Dispositif selon l'une des revendications 4 à 12, **caractérisé en ce qu'**au moins une soufflante (25) se situe dans le circuit secondaire de l'échangeur de chaleur (15).

14. Dispositif selon la revendication 13, **caractérisé en ce que** la puissance de la soufflante (25) est réglable.

15. Dispositif selon la revendication 14, **caractérisé en ce que** la soufflante (25) est réalisée avec plusieurs niveaux et **en ce que** les niveaux peuvent être, au choix, activés ou désactivés.

16. Dispositif selon la revendication 14, **caractérisé en ce que** la soufflante (25) peut être réglée sans niveaux intermédiaires ou de manière continue.

17. Dispositif selon l'une des revendications précédentes, **caractérisé en ce que** la première unité de climatisation (11) pour l'aération et/ou l'équilibrage en température de la personne assise sur le siège (10) est réalisée dans la zone de l'assise et/ou dans la zone dorsale.

18. Dispositif selon l'une des revendications précédentes, **caractérisé en ce que** la deuxième unité de climatisation (12) est destinée à la thermostatisation de la face dorsale du siège (43) du siège pour véhicules (10) présentant ladite unité de climatisation.

19. Dispositif selon la revendication 18, **caractérisé en ce que** la face dorsale (43) est au moins partiellement réalisée en tant que corps rayonnant.

20. Dispositif selon l'une des revendications précédentes, **caractérisé en ce que** la deuxième unité de climatisation (12) est destinée à fournir de l'air tempéré à l'espace réservé aux pieds (44) du siège pour véhicules (10) disposé derrière et/ou dans l'espace entre le siège pour véhicules muni de la seconde unité de climatisation et le siège pour véhicules disposé derrière.
